# EUROPÄISCHE PATENTANMELDUNG

(11) **EP 4 243 227 A1**
(43) Veröffentlichungstag der Anmeldung: **13.09.2023**
(21) Anmeldenummer: 22206292.9
(22) Anmeldetag: 09.11.2022
(51) Int. Cl.: H02G 3/14, H02G 3/12

(54) **ELEKTRISCHES/ELEKTRONISCHES INSTALLATIONSGERÄT, VERFAHREN UND VERWENDUNG ZUR PARAMETRIERUNG EINES SOLCHEN INSTALLATIONSGERÄTES**

(30) Priorität: 07.03.2022 DE 102022105268
(71) Anmelder: Insta GmbH, 58509 Lüdenscheid (DE)
(72) Erfinder: Wüller, Stefan, 58553 Halver (DE); Hopp, Christian, 44139 Dortmund (DE)
(74) Vertreter: Fobbe, Tobias

(57) **Zusammenfassung**

Zu dem Zweck, ein elektrisches/elektronisches Installationsgerät 1 zu schaffen, wobei die Parametrierung unabhängig von der Stellung und Lagerung des Bedienelementes B durchführbar ist und das Bediengefühl verbessert wird, wird ein elektrisches/elektronisches Installationsgerät 1, mit einem als Einsatz E ausgeführten Funktionsmodul F, welches zur Montage in einer in eine Gebäudewand W eingebrachte Installationsdose I vorgesehen ist, vorgeschlagen, welches elektrische/elektronische Installationsgerät 1 zur Funktion notwendige elektrische/elektronische Komponenten aufweist und welches rückseitig mit Verbindungselementen zum Anschluss an ein Installationssystem eines Gebäudes versehen ist sowie frontseitig Koppelelemente zur Herstellung einer Wirkverbindung mit zumindest einem mechanisch betätigbaren Bedienelement B aufweisenden Aufsatz A umfasst, wobei das eine Auswerte- und Steuereinheit aufweisende Funktionsmodul F einen Lichtleiter aufweist, wobei das erste Ende des Lichtleiters auf dem einen Empfänger IRE aufweisenden Funktionsmodul F angeordnet ist und das zweite Ende des Lichtleiters in den Aufsatz A des Installationsgerätes 1 integriert ist und so in diesem angeordnet ist, dass zur Parametrierung des elektrischen/elektronischen Installationsgerätes 1 optische Signale einer Fernbedienung P in den Lichtleiter einkoppelbar und durch den Empfänger IRE registrierbar sind, wobei der Lichtleiter zur Anzeige und zur Parametrierung dient.

## Beschreibung

Die Erfindung betrifft ein elektrisches/elektronisches Installationsgerät, mit einem als Einsatz ausgeführten Funktionsmodul, welches zur Montage in einer in eine Gebäudewand eingebrachten Installationsdose vorgesehen ist, und welches zur Funktion notwendige elektrische/elektronische Komponenten aufweist und welches rückseitig mit Verbindungselementen zum Anschluss an ein Installationssystem eines Gebäudes versehen ist sowie frontseitig Koppelelemente zur Herstellung einer Wirkverbindung mit zumindest einem mechanisch betätigbaren Bedienelement aufweisenden Aufsatz umfasst, wobei das eine Auswerte- und Steuereinheit aufweisende Funktionsmodul einen Lichtleiter aufweist.

Die Erfindung betrifft ferner ein Verfahren zum Parametrieren eines solchen elektrischen/elektronischen Installationsgerätes.

Elektrische/elektronische Installationsgeräte, beispielsweise Steckdosen, Schalter oder Taster, sind regelmäßig an ein Energieversorgungssystem angeschlossen, meistens an verschiedene Stromkreise in einem Gebäude. Sie dienen der bedarfsgerechten Beeinflussung an sie angeschlossener Verbraucher, beispielsweise einer Lampe (durch einen Dimmer) oder eines Stellmotors eines Heizkreislaufes (durch ein Raumthermostat).

Vorbekannt sind solche elektrischen/elektronischen Installationsgeräte, beispielsweise als Raumtemperaturregler, die einen Drehregler zum Einstellen der gewünschten Raumtemperatur aufweisen. Solche Raumtemperaturregler sind beispielsweise aus dem Online-Katalog *https:*//*www.jung.de*/*de*/*online-katalog*/*62937681*/*62937682*/ oder *https:*//*katalog.gira.de*/*de_DE*/*dir.html?id*=*762742* bekannt. Zur Anzeige weisen solche Raumtemperaturregler ein Funktionsmodul auf, an das ein Lichtleiter angeschlossen ist, dessen erstes Ende zur Einkopplung eines LED-Signals auf einem Funktionsmodul angeordnet ist, während das eingekoppelte Signal das zweite Ende des Lichtleiters verlässt und eine Anzeigefunktion, beispielsweise zur Visualisierung des Betriebsmodus über die Emission eines Farbsignals, übernimmt.

Zur Parametrierung durch den Installateur, meistens ein Elektriker, wird regelmäßig der zur Raumtemperaturreglung geeignete Drehregler mit einer Druckfunktion ausgestattet, bei der die Rotationsachse, auf der der Drehregler gelagert wird, axial betätigbar ist. Durch Drücken des Drehreglers in die Wandebene hinein, wird dann der Parametriermodus gestartet, wobei die eigentliche Parametrierung dann durch Verstellen des Drehreglers erfolgt.

Problematisch bei einer derartigen Parametrierung ist - gerade wenn bereits eine gewünschte Raumtemperatur durch eine präzise Stellung des Drehreglers eingestellt worden ist, dass - sollte eine Parametrierung notwendig werden - zwangsläufig die Rotationsachse verstellt wird, obwohl dieses unerwünscht ist.

Darüber hinaus erfordert die für eine derartige Parametrierung erforderliche Druckfunktion ein gewisses Spiel der Achse, auf der der Drehregler drehbar gelagert ist, um beim Drücken nicht zu verhaken. Dieses Achsenspiel ist nachteilig für die Einstellung, die durch den Knopf vorgenommen wird.

Ausgehend von diesem diskutierten Stand der Technik liegt der Erfindung die Aufgabe zugrunde, ein kostenoptimiertes, bauraumoptimiertes und designtechnisch unverändertes elektrisches/elektronisches Installationsgerät, beispielsweise einen Raumtemperaturregler, zu schaffen, welches eine Parametrierung erlaubt, wobei die vorstehend genannten Nachteile vermieden sind. Insbesondere soll die Parametrierung unabhängig von der Stellung und Lagerung des Bedienelementes durchführbar sein und das Bediengefühl verbessert werden.

Gelöst wird diese Aufgabe durch ein elektrisches/elektronisches Installationsgerät, wobei das erste Ende des Lichtleiters auf dem einen Empfänger aufweisenden Funktionsmodul angeordnet ist, das zweite Ende des Lichtleiters in den Aufsatz des Installationsgerätes integriert ist und so in diesem angeordnet ist, dass zur Parametrierung des Installationsgerätes optische Signale einer Fernbedienung in den Lichtleiter einkoppelbar und durch den Empfänger registrierbar sind, wobei der Lichtleiter zur Anzeige und zur Parametrierung dient.

Der Kerngedanke der Erfindung besteht darin, dass das erfindungsgemäße elektrische/elektronische Installationsgerät dazu in der Lage ist, den ohnehin zur Anzeige vorhandenen Lichtleiter in beide Richtungen, also bidirektional, zu nutzen. Dazu ist das erste Ende des Lichtleiters auf dem einen Empfänger aufweisenden Funktionsmodul angeordnet und das zweite Ende des Lichtleiters in den Aufsatz des Installationsgerätes integriert. Damit ist es zur Parametrierung des Installationsgerätes möglich, optische Signale einer Fernbedienung in den Lichtleiter einzukoppeln, welche durch den Empfänger des Funktionsmoduls registrierbar sind. Hierdurch werden keine besonderen Anforderungen an die Stellung und Lagerung des Bedienelementes gestellt, insbesondere kein Spiel, wobei die Zusatzkosten minimal ausfallen, da der Lichtleiter aus Gründen der Anzeige des Betriebsmodus ohnehin vorhanden ist.

Es versteht sich, dass der Lichtleiter auch aus unterschiedlichen Lichtleiterabschnitten zusammengesetzt ausgebildet sein kann.

Das erfindungsgemäße elektrische/elektronische Installationsgerät ist mit einem als Einsatz ausgeführten Funktionsmodul versehen, welches zur Montage in einer in eine Gebäudewand eingebrachte Installationsdose vorgesehen ist, und welches zur Funktion notwendige elektrische/elektronische Komponenten aufweist und welches rückseitig mit Verbindungselementen zum Anschluss an ein Installationssystem eines Gebäudes versehen ist sowie frontseitig Koppelelemente zur Herstellung einer Wirkverbindung mit zumindest einem mechanisch betätigbaren Bedienelement aufweisenden Aufsatz umfasst. Dabei weist das eine Auswerte- und Steuereinheit aufweisende Funktionsmodul einen Lichtleiter auf, welcher beim elektrischen/elektronischen Installationsgerät bidirektional nutzbar ist.

Besonders vorteilhaft bei dem erfindungsgemäßen elektrischen/elektronischen Installationsgerät ist, dass keine besonderen Anforderungen an die Stellung und Lagerung des Bedienelementes mehr zu stellen sind. Eine Parametrierung erfolgt auf kostengünstige, designunschädliche und bauraumoptimierte Weise, indem zur Parametrierung des Installationsgerätes optische Signale einer Fernbedienung in den Lichtleiter einkoppelbar und durch den Empfänger registrierbar sind. Kostentechnisch optimal ist, dass der ohnehin bereits vorhandene Lichtleiter bidirektional genutzt wird. Aus Kostengründen besonders vorteilhaft ist ferner, mit einer einzigen Fernbedienung eine Vielzahl erfindungsgemäßer elektrischer/elektronischer Installationsgeräte parametrieren zu können.

Gemäß einer besonders einfachen und designtechnisch ansprechenden Ausgestaltung der Erfindung ist das zweite Ende des Lichtleiters direkt in das Bedienelement des Aufsatzes integriert. In einer Weiterbildung dieser Ausführungsform der Erfindung ist das Bedienelement auf einer Rotationsachse drehbar gelagert, wobei die Rotationsachse direkt als Lichtleiter fungiert, indem sie aus einem lichtleitenden Kunststoff gefertigt ist.

Besonders wirksam kommen die erfindungsgemäßen Vorteile zur Anwendung, wenn das elektrische/elektronische Installationsgerät ein Raumtemperaturregler ist, da bei diesem die Stellung des Bedienelementes auf einer Rotationsachse regelmäßig besonders präzise eingestellt werden muss.

Gemäß einer besonders einfach herzustellenden und montierenden Ausgestaltung der Erfindung ist der Lichtleiter aus unterschiedlichen Lichtleiter-Abschnitten zusammengesetzt.

Besonders vorteilhaft bezüglich einer Vor-Ort-Bedienung ist, dass bei einer Weiterbildung des erfindungsgemäßen elektrischen/elektronischen Installationsgerätes im Funktionsmodul ein Sender vorgesehen ist, welcher ein Signal in den Lichtleiter einkoppelt, welches Signal durch eine Vor-Ort-Bedienung des zweiten Endes des Lichtleiters mit dem Finger eines Anwenders zur Auswertung durch die Auswerteeinheit zurück zum Empfänger reflektiert wird. Hierdurch wird eine optische Bedienung durch eine Fernbedienung zur Parametrierung erlaubt, während eine optische Reflexions-Bedienung zur Vor-Ort-Bedienung, beispielsweise dem Ein-Aus-Moduswechsel, möglich ist. Hierdurch wird eine vorteilhafte Vor-Ort-Bedienung ermöglicht, die unabhängig von der Stellung des Bedienelementes ist, indem auf intelligente Art und Weise die sich in Folge der Fingerbedienung ändernde Reflektivität des als Auskopplungsende fungierenden Lichtleiterendes ausgenutzt wird.

Die Erfindung betrifft ferner ein Verfahren zum Parametrieren eines solchen elektrischen/elektronischen Installationsgerätes umfassend die folgenden Schritte:
- Installieren des elektrischen/elektronischen Installationsgerätes in einer in eine Gebäudewand eingebrachten Installationsdose,
- Anzeigen des Installationsgerätestatus über das zweite Ende des Lichtleiters und
- Parametrieren des elektrischen/elektronischen Installationsgerätes durch Einkoppeln optischer Signale einer Fernbedienung in das zweite Ende des Lichtleiters.

Mit diesem Verfahren wird eine besonders einfache und komfortable Durchführung der Parametrierung ermöglicht.

Gemäß einer Weiterbildung dieses erfindungsgemäßen Verfahrens wird zur Vor-Ort-Bedienung des elektrischen/elektronischen Installationsgerätes das zweite Ende des Lichtleiters mit dem Finger eines Anwenders berührt, so dass ein durch einen Sender in das erste Ende des Lichtleiters eingekoppeltes Signal zurück zum Empfänger reflektiert wird und durch die Auswerteeinheit ausgewertet wird. Hierdurch wird eine Vor-Ort-Bedienung ermöglicht, die unabhängig von der Stellung des Bedienelementes ist.

Die Erfindung betrifft ferner die Verwendung eines erfindungsgemäßen elektrischen/elektronischen Installationsgerätes zur Anzeige und zur Parametrierung.

Nachfolgend ist die Erfindung unter Bezugnahme auf die beigefügten Figuren anhand diverser Ausführungsbeispiele beschrieben. Es zeigen:
- **Fig. 1:**: eine perspektivische Explosions-Darstellung einer Ausgestaltung des erfindungsgemäßen elektrischen/elektronischen Installationsgerätes,
- **Fig. 2:**: eine Querschnitts-Darstellung des Aufsatzes des erfindungsgemäßen elektrischen/elektronischen Installationsgerätes,
- **Fig. 3:**: eine Querschnitts-Darstellung des Einsatzes des erfindungsgemäßen elektrischen/elektronischen Installationsgerätes in der Wandmontage,
- **Fig. 4:**: eine Draufsicht auf den Aufsatz des erfindungsgemäßen elektrischen/elektronischen Installationsgerätes, wobei die Parametrierung über ein Signal, das in den zu Anzeigezwecken ohnehin vorhandenen Lichtleiter eingekoppelt wird, erfolgt und
- **Fig. 5:**: eine Draufsicht auf den Aufsatz des erfindungsgemäßen elektrischen/elektronischen Installationsgerätes, wobei zur VorOrt-Bedienung des elektrischen/elektronischen Installationsgerätes das zweite Ende des Lichtleiters mit dem Finger eines Anwenders berührt wird.

In den verschiedenen Figuren sind gleiche Teile stets mit den gleichen Bezugszeichen versehen und werden daher in der Regel auch jeweils nur einmal benannt beziehungsweise erwähnt.

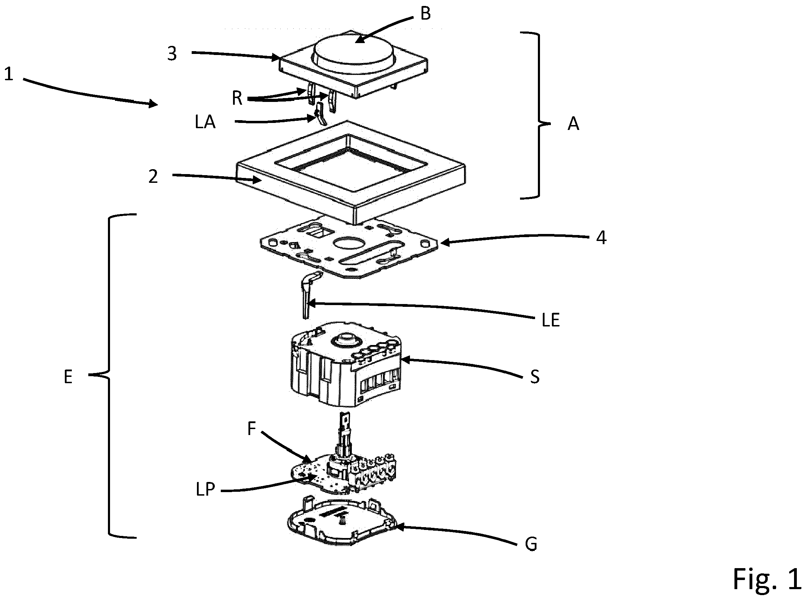

Das in Figur 1 perspektivisch dargestellte erfindungsgemäße elektrische/elektronische Installationsgerät 1 umfasst einen Aufsatz A und einen Einsatz E.

Der Aufsatz A umfasst neben einem Designrahmen 2 ein Zentralstück 3, sowie eine Bedieneinheit B. Ferner weist der Aufsatz A des elektrischen/elektronischen Installationsgerätes 1 einen Lichtleiter auf, hier: einen Lichtleiter, der aus unterschiedlichen Lichtleiter-Abschnitten LA, LE zusammengesetzt ist, wobei ein Lichtleiterabschnitt LA (das zweite Ende des Lichtleiters) in den Aufsatz A des elektrischen/elektronischen Installationsgerätes 1 integriert ist und so in diesem angeordnet ist, dass zur Parametrierung des elektrischen/elektronischen Installationsgerätes 1 optische Signale einer Fernbedienung P in den Lichtleiter einkoppelbar sind.

Der Einsatz E umfasst eine mehrere elektrische/elektronische Funktionskomponenten (insbesondere eine Auswerteelektronik, einen Sender IRS, einen Empfänger IRE und eine Anzeige LED), welche auf einem Funktionsmodul F der Leiterplatte LP angeordnet sind. Der Tragring 4, dient neben dem Festlegen an beziehungsweise in einer Installationsdose I zur Aufnahme des Zentralstücks 3 über Rastmittel R. Der Einsatz E umfasst ferner ein Sockelteil S, welches an eine Spannungsversorgungseinheit anschließbar ist. Das Sockelteil S stellt gleichzeitig ein Gehäuseoberteil dar, welches mit dem Gehäuseboden G ein Gehäuse für die Leiterplatte LP bildet.

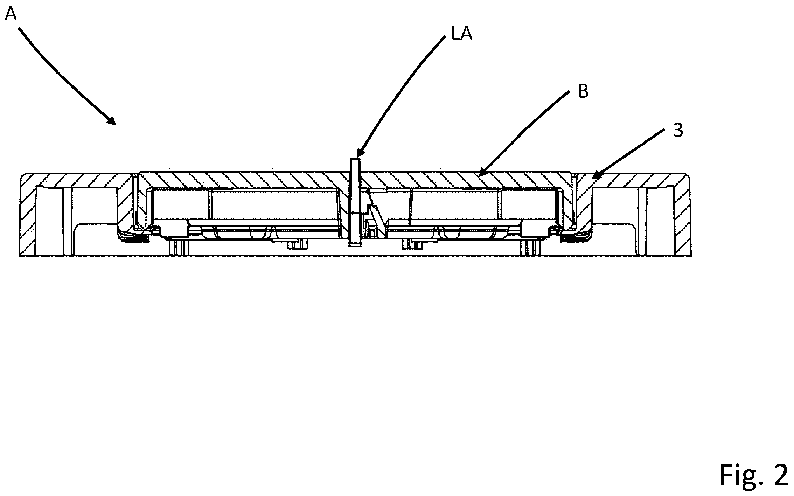

In Figur 2 ist eine Querschnitts-Darstellung des Aufsatzes A ohne Designrahmen 2 des erfindungsgemäßen elektrischen/elektronischen Installationsgerätes 1 gegeben. Dabei ist zu erkennen, wie das zweite Ende des Lichtleiters, hier: der Lichtleiterabschnitt LA des Aufsatzes A, so angeordnet ist, dass zur Parametrierung des elektrischen/elektronischen Installationsgerätes 1 optische Signale einer Fernbedienung P in den Lichtleiter einkoppelbar sind.

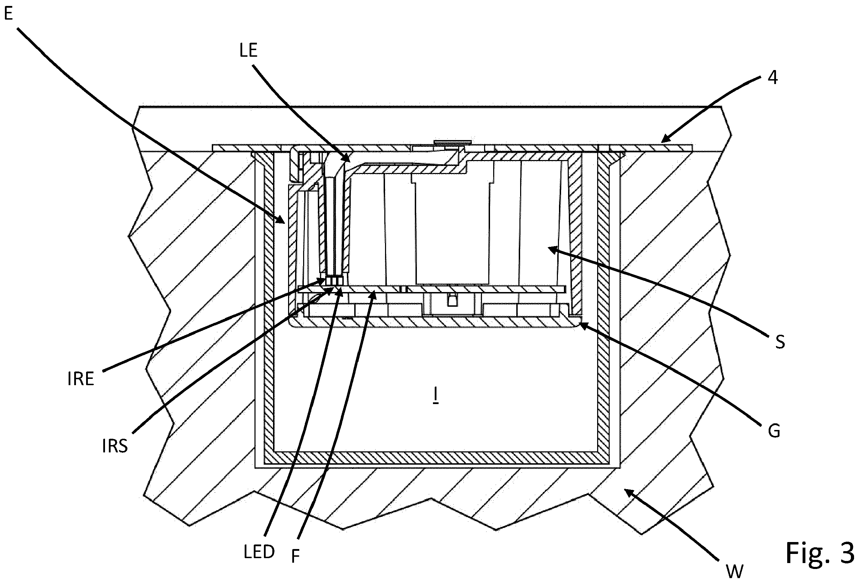

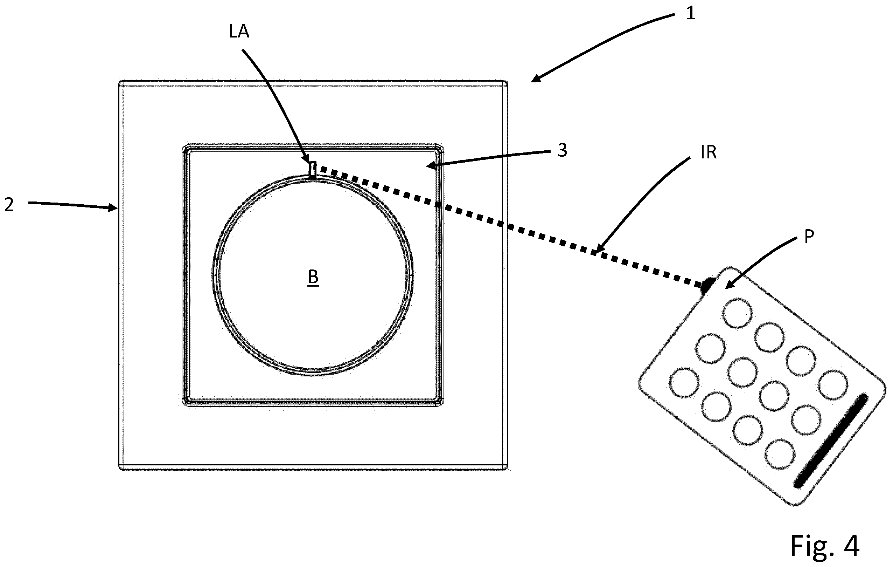

In Figur 3 ist schematisch eine Querschnitts-Darstellung des Einsatzes E des erfindungsgemäßen elektrischen/elektronischen Installationsgerätes 1 in der Wandmontage gezeigt, wobei der Einsatz E in einer in der Gebäudewand befindlichen Installationsdose I aufgenommen ist. Dabei ist sämtliches zur Funktion erforderliches Kabelgut der Übersichtlichkeit halber nicht dargestellt. Das erste Ende des Lichtleiters, hier: der Abschnitt LE des Lichtleiterabschnittes des Einsatzes E, ist auf dem einen Empfänger IRE aufweisenden Funktionsmodul F angeordnet, so dass zur Parametrierung des elektrischen/elektronischen Installationsgerätes 1 optische Signale einer Fernbedienung P gemäß Figur 4 in den Lichtleiter einkoppelbar und durch den auf dem Funktionsmodul F angeordneten Empfänger IRE registrierbar sind, wobei der Lichtleiter zur Anzeige eines über die LED in den Lichtleiter einkoppelbaren Anzeigesignals und zur Parametrierung dient.

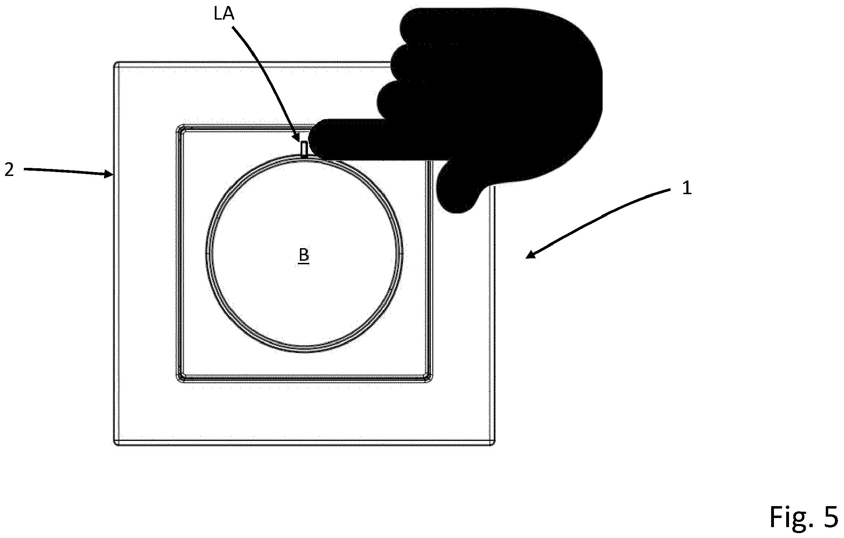

Aufgrund der bevorzugten Ausführungsform gemäß Figur 5, wobei im Funktionsmodul F des elektrischen/elektronischen Installationsgerätes 1 ein Sender IRS vorgesehen ist, welcher ein Signal in den Lichtleiter eingekoppelt, welches Signal durch eine Vor-Ort-Bedienung des zweiten Endes des Lichtleiters mit dem Finger eines Anwenders zur Auswertung durch die Auswerteeinheit zurück zum Empfänger IRE reflektiert wird, wird eine Vor-Ort-Bedienung vorteilhafterweise auf besonders einfache und kostengünstige Weise ermöglicht. Eine derartige Vor-Ort-Bedienungsmöglichkeit ist aufgrund des ohnehin bezüglich der Anzeige vorhandenen Lichtwellenleiters besonders kostengünstig und optisch unschädlich implementierbar.

Die Erfindung ist anhand von Ausführungsbeispielen beschrieben. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen im Einzelnen erläutert werden müsste.

### Bezugszeichenliste

- 1: elektrisches/elektronisches Installationsgerät
- 2: Designrahmen
- 3: Zentralstück
- 4: Tragring

- A: Aufsatz
- B: Bedieneinheit
- E: Einsatz
- F: Funktionsmodul
- G: Gehäuseboden
- IR: Signal
- IRE: Empfänger
- IRS: Sender
- LA: Lichtleiterabschnitt des Aufsatzes
- LE: Lichtleiterabschnitt des Einsatzes
- LED: Anzeige
- LP: Leiterplatte
- P: Fernbedienung
- R: Rastmittel
- S: Sockelteil

## Patentansprüche

1. Elektrisches/elektronisches Installationsgerät, mit einem als Einsatz (E) ausgeführten Funktionsmodul (F), welches zur Montage in einer in eine Gebäudewand (W) eingebrachte Installationsdose (I) vorgesehen ist, und welches zur Funktion notwendige elektrische/elektronische Komponenten aufweist, und welches rückseitig mit Verbindungselementen zum Anschluss an ein Installationssystem eines Gebäudes versehen ist sowie frontseitig Koppelelemente zur Herstellung einer Wirkverbindung mit zumindest einem mechanisch betätigbaren Bedienelement (B) aufweisenden Aufsatz (A) umfasst, wobei das eine Auswerte- und Steuereinheit aufweisende Funktionsmodul (F) einen Lichtleiter aufweist, **dadurch gekennzeichnet, dass** das erste Ende des Lichtleiters auf dem einen Empfänger (IRE) aufweisenden Funktionsmodul (F) angeordnet ist, das zweite Ende des Lichtleiters in den Aufsatz (A) des Installationsgerätes (1) integriert ist und so in diesem angeordnet ist, dass zur Parametrierung des elektrischen/elektronischen Installationsgerätes (1) optische Signale einer Fernbedienung (P) in den Lichtleiter einkoppelbar und durch den Empfänger (IRE) registrierbar sind, wobei der Lichtleiter zur Anzeige und zur Parametrierung dient.

2. Elektrisches/elektronisches Installationsgerät nach Anspruch 1, **dadurch gekennzeichnet, dass** das zweite Ende des Lichtleiters in das Bedienelement (B) integriert ist.

3. Elektrisches/elektronisches Installationsgerät nach Anspruch 2, **dadurch gekennzeichnet, dass** das Bedienelement (B) auf einer Rotationsachse drehbar gelagert ist.

4. Elektrisches/elektronisches Installationsgerät nach Anspruch 3, **dadurch gekennzeichnet, dass** das elektrische/elektronische Installationsgerät (1) ein Raumtemperaturregler ist.

5. Elektrisches/elektronisches Installationsgerät nach einem der Ansprüche 1 bis 4, **dadurch gekennzeichnet, dass** der Lichtleiter aus unterschiedlichen Lichtleiter-Abschnitten (LA, LE) zusammengesetzt ist.

6. Elektrisches/elektronisches Installationsgerät nach einem der Ansprüche 1 bis 5, **dadurch gekennzeichnet, dass** im Funktionsmodul (F) ein Sender (IRS) vorgesehen ist, welcher ein Signal in den Lichtleiter eingekoppelt, welches Signal durch eine Vor-Ort-Bedienung des zweiten Endes des Lichtleiters mit dem Finger eines Anwenders zur Auswertung durch die Auswerteeinheit zurück zum Empfänger (IRE) reflektiert wird.

7. Elektrisches/elektronisches Installationsgerät nach Anspruch 6, **dadurch gekennzeichnet, dass** der Sender (IRS) eine Infrarot emittierende Diode ist.

8. Verfahren zum Parametrieren eines elektrischen/elektronischen Installationsgerätes nach einem der Ansprüche 1 bis 7, umfassend die Schritte:
- Installieren des elektrischen/elektronischen Installationsgerätes (1) in einer in eine Gebäudewand (W) eingebrachten Installationsdose (I),
- Anzeigen des Installationsgerätestatus über das zweite Ende des Lichtleiters und
- Parametrieren des elektrischen/elektronischen Installationsgerätes (1) durch Einkoppeln optischer Signale einer Fernbedienung (P) in das zweite Ende des Lichtleiters

9. Verfahren nach Anspruch 8, **dadurch gekennzeichnet, dass** zur Vor-Ort-Bedienung des elektrischen/elektronischen Installationsgerätes (1) das zweite Ende des Lichtleiters mit dem Finger eines Anwenders berührt wird, so dass ein durch einen Sender (IRS) in das erste Ende des Lichtleiters eingekoppeltes Signal zurück zum Empfänger (IRE) reflektiert wird und durch die Auswerteeinheit ausgewertet wird.

10. Verwendung eines elektrischen/elektronischen Installationsgerätes (1) nach einem der Ansprüche 1 bis 7 zur Anzeige und zur Parametrierung.
